# EUROPEAN PATENT APPLICATION

(11) **EP 0 755 170 A2**
(43) Date of publication of application: **22.01.1997**
(21) Application number: 96305178.4
(22) Date of filing: 15.07.1996
(51) Int. Cl.: H05B 3/28, H05B 1/02

(54) **Food warmer foil heater and sensor assembly including plural zone heater assembly**

(30) Priority: 17.07.1995 US 503042; 17.07.1995 US 503189
(71) Applicant: PRINCE CASTLE INC., Carol Stream, Illinois 60188 (US)
(72) Inventor: Vaseloff, Denis J., Waukegan, Illinois 60087 (US)
(74) Representative: Allden, Thomas Stanley

(57) **Abstract**

A pass thru food warming apparatus is shown with a housing defining open rear and front ends between which food products can be passed. A generally horizontal grate extends between the open rear and front ends of the housing and on which the food products can be supported. A heating platform is mounted beneath the grate for warming the food products supported by the grate. The heating platform includes a generally horizontal top plate, a radiant heater and sensor assembly immediately beneath the top plate for heating the top plate, and a generally horizontal bottom plate spaced beneath the heating device to define a cooling chamber therebetween. The heater and sensor assembly includes a substrate having a select size and shape defining a plurality of heated zone areas. An elongate foil heater conductor is secured to the substrate in each zone area. The heater conductor extends about the substrate in a first select pattern to generate heat proximate thereto. An elongate foil sensor conductor is secured to the substrate in each zone area. The sensor conductor extends about the substrate proximate the heater conductor in a second select pattern, generally similar to the first select pattern, so that the sensor conductor senses temperature of the entire zone area.

## Description

### Field of the Invention

This invention relates to a food heating apparatus and, more particularly, to a plural zone heater assembly therefor.

### Background of the Invention

Various types of ovens or food warming apparatus are used in a wide variety of applications, particularly in the food preparation and distribution fields. Such apparatus may range from a completely closed oven to pass thru devices which may have one or more open ends. For instance, in high volume restaurants or similar establishments, it is common to separate the cooking or kitchen area from the ordering/serving area by a divider or partition area through which the cooked food is passed from the cooking area to the serving area. It also is common to have one or more food warming apparatus in the partition area and through which the cooked food is placed for serving seriatim to customers. The apparatus most often is an enclosed structure which has an open rear end into which the cooked food is placed and an open front end from which the food is taken in a first-in/first-out manner for serving to the customers.

Of obvious importance in a food warming apparatus is the ability to accurately control temperature. This is most often accomplished using a heating element suitably located within the food warming apparatus along with a temperature sensor for determining actual temperature. With use of a thermostatic type control the heater is energized to add additional heat if sensed temperature is below a preselect desired temperature. In a conventional food warming apparatus the temperature sensor comprises a point sensing element which determines temperature at a specific location. One such food warming apparatus uses a foil resistance heater having a pattern of conductive foil on an insulating substrate. The temperature sensor may comprise a point sensing element centrally located on the substrate. Such a sensor is satisfactory if the temperature at the sensed location accurately reflects temperature at all relevant locations of the food warming apparatus. Often it does not. As such, the accuracy is limited to the specific point being monitored.

With a typical food warming apparatus a single foil heater is provided for any heated area. This limits the ability to control distinct areas independently without supplying separate foil heater assemblies.

The present invention is directed to solving one or more of the problems discussed above in a novel and simple manner.

### Summary of the Invention

In accordance with the invention a foil heater assembly has plural heated zone areas.

Broadly, there is disclosed herein a plural zone heater assembly including a substrate having a select size and shape defining a plurality of heated zone areas. A plurality of elongate foil heater conductors are secured to the substrate, one in each of the zone areas. Each heater conductor extends about its zone area in a first select pattern to generate heat proximate thereto. A plurality of elongate foil sensor conductors are secured to the substrate. Each sensor conductor extends about the substrate proximate an associated one of the heater conductors in a second select pattern, generally similar to the first select pattern, so that the sensor conductor senses temperature of the heated zone area.

Particularly, the substrate comprises a fiberglass mesh. The heater conductors and sensor conductors comprise a foil layer on the mesh etched to form the select patterns. The substrate is sandwiched between insulating mica sheets.

In accordance with another aspect of the invention the heater assembly is included in a food heating apparatus including a housing for holding food products, a heated plate in the housing and a temperature control for maintaining a desired temperature. The heaters are operated by the temperature control. The sensor conductors are connected to the temperature control. Means are provided mounting the heater and sensor assembly proximate the heated plate.

Further features and advantages of the invention will be readily apparent from the specification and from the drawings.

### Brief Description of the Drawings

Fig. 1 is a perspective view of a pass thru food warming apparatus including a heater and sensor assembly embodying the concepts of the invention;
Fig. 2 is a fragmented vertical section, on an enlarged scale, taken generally along line 2-2 of Fig. 1;
Fig. 3 is an exploded perspective view of the heating platform of the apparatus;
Fig. 4 is a further enlarged scale, similar to Fig. 2, specifically illustrating the heater and sensor assembly;
Fig. 5 is a plan view of a cut-away portion of the heater and sensor assembly;
Fig. 6 is a block diagram of a temperature control of the food warming apparatus of Fig. 1;
Fig. 7 comprises an illustration of an alternative heater and sensor conductor pattern for the heater and sensor assembly according to the invention;
Fig. 8 comprises an illustration of another alternative heater and sensor conductor pattern for the heater and sensor assembly according to the invention;
Figs. 9, 10 and 11 comprise illustrations representing heater and sensor assemblies according to the invention including defined areas for sensing temperatures in specific zones;
Fig. 12 comprises a perspective view of a plural zone heater assembly according to an alternative embodiment of the invention; and
Fig. 13 is a block diagram of a temperature control of a food warming apparatus including the plural zone heater assembly of Fig. 12.

### Detailed Description of the Invention

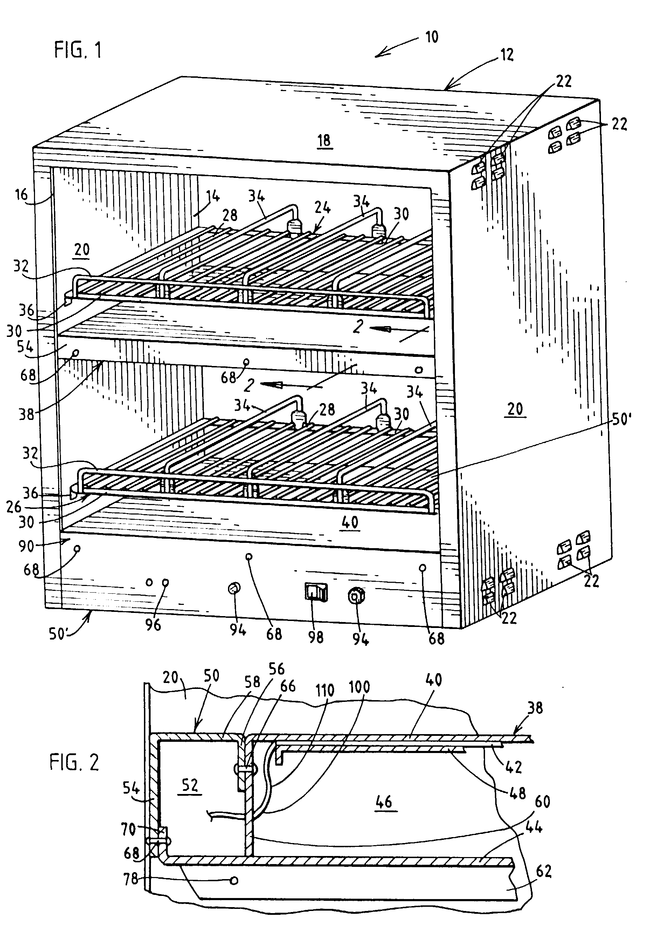

Referring to the drawings in greater detail, and first to Fig. 1, the invention is described and shown in connection with a food heating apparatus, in the form of a food warming apparatus, generally designated 10, which includes a housing, generally designated 12, defining an open rear end 14 and an open front end 16 between which food products can be passed. For instance, the pass thru food warming apparatus 10 may be employed in a divider or partition area of a high volume restaurant or other establishment, separating a rear cooking or kitchen area from a front ordering or service area. Cooking personnel would place cooked food products into the apparatus through open rear end 14, and serving personnel would take the food products from the apparatus through open front end 16. The food products, thereby, pass from the cooking area to the serving area seriatim in a first-in/first-out manner.

The housing 12 further includes a top wall 18 and a pair of side walls 20 which, as viewed in Fig. 1, are of a substantial thickness. In the preferred embodiment, the entire housing is fabricated of sheet metal material and the top wall 18 and the side walls 20 are of a dual-wall construction to define cooling chambers within the top and side walls. Vents 22 are stamped and formed out of the side walls 20 to allow circulation through the chamber and the escape of warm air from therewithin. Lastly, while the outside of the housing 12 (i.e. top wall 18 and side wall 20) may have a brushed appearance for aesthetic purposes, preferably the insides of the top and side walls have high reflective surfaces to enhance the efficiency of the warming apparatus, as will be understood hereinafter.

An upper grate, generally designated 24, and a lower grate, generally designated 26, are generally horizontal and extend between the front and rear open ends 16 and 14, respectively, of the housing 12. Each grate is of similar or identical construction and includes a plurality of front-to-rear bars 28 fixed between a pair of front and rear cross bars 30. A front rail bar 32 prevents food products from being pushed off of the front ends of the grates when the grates are "loaded" at their rear ends. Divider bars 34 extend front-to-rear and divide the grate into transverse "chutes" so that different types of food products, such as different types of sandwiches, can be arranged in sort of horizontal columns for passing seriatim through the warming apparatus. Lastly, mounting tabs 36 depend from opposite sides of each grate 24 and 26 and through which appropriate fasteners, such as screws, bolts or rivets can pass to secure the grates within the housing 12 spanning the side walls 20 and extending between the open front and rear ends of the housing.

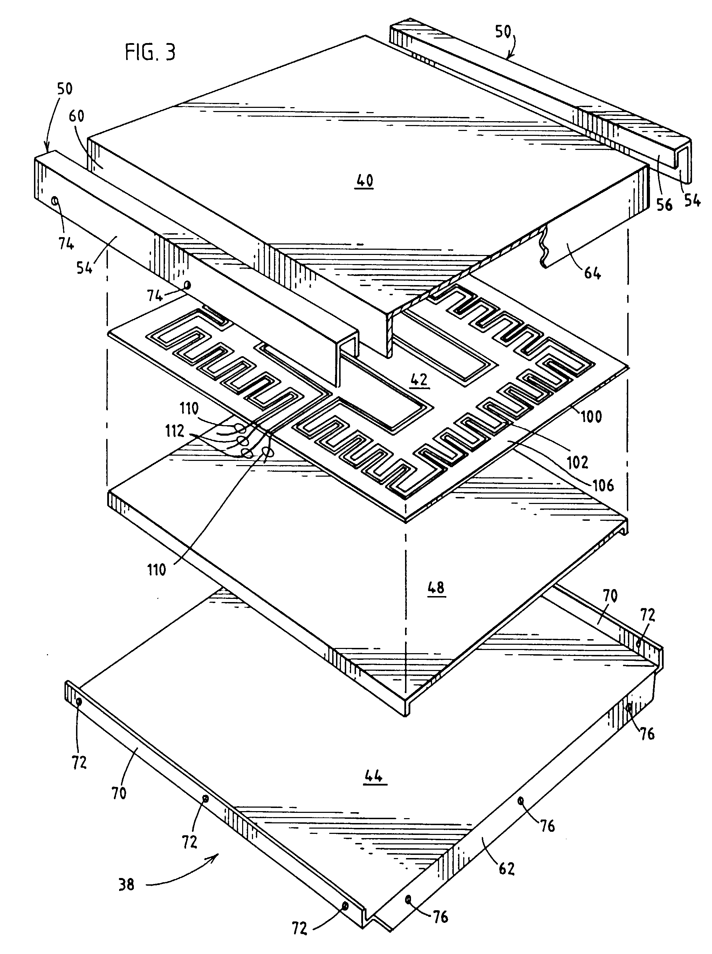

A heating platform, generally designated 38, is mounted within the housing and extends between the open front and rear ends thereof, spanning the side walls 20 and spaced beneath the top grate 24. Referring to Figs. 2 and 3 in conjunction with Fig. 1, the heating platform 38 includes a generally horizontal top plate 40, a generally planar heater and sensor assembly 42 immediately beneath the top plate for heating the top plate, and a generally horizontal bottom plate 44 spaced beneath the heating device to define a cooling chamber 46 (Fig. 2) therebetween. A reflector plate 48 is located immediately beneath the heating and sensor assembly 42 whereby the assembly 42 is sandwiched between the top plate 40 and the reflector plate 48. The reflector plate has a highly reflective surface on one or both sides thereof to radiate the heat from the heater and sensor assembly 42 upward and to facilitate maintaining the cooling chamber 46 as cool as possible. In some applications the reflector plate may not be required.

An elongated spacer channel 50 is located along both the front and rear edges of the heating platform 38 to define a cooling chamber 52 (Fig. 2) therewithin. Each spacer channel has an inverted, generally U-shaped cross-section as seen in Fig. 2. This configuration defines an outer downwardly depending leg 54, an inner downwardly depending leg 56 and a bight portion 58 joining the legs. The outer leg 54 is longer than the inner leg 56 as seen in Fig. 2. For assembly purposes described below, the top plate 40 has front and rear flanges 60 depending therefrom, and the bottom plate 44 has downwardly depending flanges 62 at the sides thereof. As seen in Fig. 3, the top plate 40 also has downwardly depending flanges 64 at the sides thereof.

In assembly of the heating platform 38, the front and rear spacer channels 50 are assembled to the top plate 40 by means of fasteners 66 (Fig. 2), such as bolts, rivets, sheet metal screws and the like, secured between the inner legs 56 of the spacer channels and the front and rear flanges 60 of the top plate. Either before or after assembling the spacer channels to the top plate, the planar heater and sensor assembly 42 is mounted on the underside of the top plate 40 in the position shown in Fig. 2. This is accomplished by assembling the reflector plate 48 to the top plate 40 by appropriate fasteners (not shown), such as screws, bolts or rivets, about the periphery of the reflector plate and the planar heater and sensor assembly.

This subassembly of the top plate 40, heater and sensor assembly 42, the reflector plate 48 and the spacer channels 50 then are assembled to the bottom plate 44 by means of appropriate fasteners 68, such as bolts, rivets, screws and the like, secured between the outer legs 54 of the spacer channels 50 and upturned flanges 70 along the front and rear edges of the bottom plate 44. Holes 72 in the flanges 70 and holes 74 in the legs 54 are shown in Fig. 3 for accepting the fasteners 68. The flanges 62 depending along the side edges of the bottom plate 44 include holes 76 (Fig. 3) for receiving appropriate fasteners 78 (Fig. 2), such as bolts, rivets, screws and the like, for securing the bottom plate 44 and, thereby, the entire heating platform assembly 38, to the inside of the side walls 20 of the housing 12 as seen in Figs. 1 and 2. Alternatively, the bottom plate 44 can be secured between the side walls, and the subassembly of the top plate 44, heater and sensor assembly 42, the reflector plate 48 and the spacer channels 50 can be assembled to the bottom plate after it is assembled between the housing side walls.

Referring back to Fig. 1, a lower heating platform 90 is located below grate 26. This lower heating platform 90 is substantially identical to the upper heating platform 38 and will not be described in further detail, except to note that the second heating platform 90 has a front elongated spacer channel, generally designated 50', which has an outer leg 54' that is considerably longer than the outer leg 54 of the spacer channel 50 of the upper heating platform 38. Otherwise, the lower heating platform 90 includes a top platform 40 which is visible in Fig. 1, along with another planar heater and sensor assembly 42 and the plate 40 which are not visible in Fig. 1. The outer leg 54' of the spacer channel 50' elevates the top heated plate 40 of the lower heating platform 90 sufficiently above the bottom of the warming apparatus 10 to accommodate various controls therebeneath. For instance, Fig. 1 shows outer leg 50' mounting various control elements 94, indicating elements 96 and an on-off switch 98. In addition, electrical wire 110 (Fig. 2) from the upper heater and sensor assembly 42 extends through a hole 100 in the flange 60 and into the cooling chamber 52. The wire then can be fed to one end of the spacer channel 50, into the space within one of the dual-walled side walls 20 and back into the interior of lower spacer channel 50' for appropriate electrical connection to the controls behind the lower spacer channel.

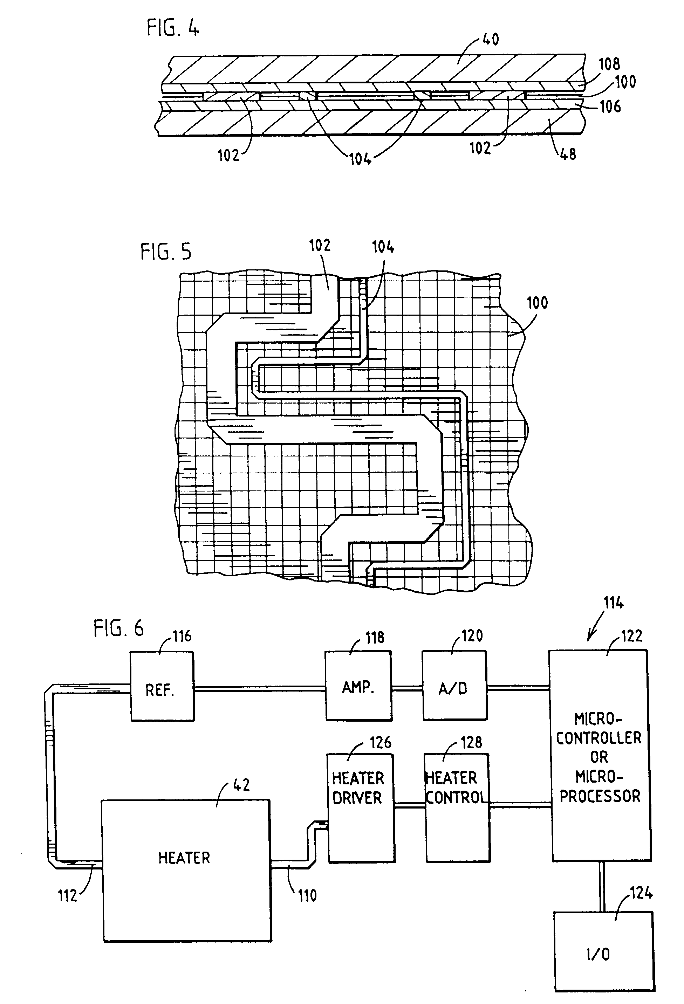

Referring to Figs. 3, 4 and 5 the planar heater and sensor assembly 42 comprises a substrate in the form of a ceramic or fiberglass mesh 100 (the details of which are apparent in Figs. 4 and 5) with a first select pattern 102 of conductive stainless steel alloy resistance material and a second select pattern 104 of conductive stainless steel alloy resistance material etched thereon. As is apparent, other types of resistance material may be used. The first pattern 102 comprises an elongate foil heater conductor which extends about the substrate 100 to generate heat proximate thereto in a defined area. In the embodiment of Fig. 3, in order to provide a uniform heating environment and with the apparatus being subjected to air currents about the periphery, particularly at the open ends thereof, the pattern of the resistance foil is more concentrated about the periphery of the substrate 100. The second pattern 104 comprises an elongate foil sensor conductor secured to the substrate 100 and extending proximate the heater conductor 102. Thus, the first and second select patterns 102 and 104 are generally similar. As a result, the sensor conductor 104 is exposed to the temperature of the entire area defined by the heater conductor 102 and develops a resistance characteristic representing temperature.

The substrate 100, with the conductors 102 and 104 affixed thereto, is cased in a cementing compound and sandwiched between insulating sheets 106 and 108, see Fig. 4. In the illustrated embodiment the sheets 106 and 108 are mica. The mica sheets are thus secured to the substrate 100 and insulate the conductors 102 and 104 from the top plate 40 and the reflective plate 48. Heat from the heater conductors 102 is transferred to the heated surface of the top plate 40 through the mica insulator 108. The heat from the top plate 40 is transferred back to the sensor conductors 104 through the mica insulator 108. The sensor conductors 104 also receive heat from the air space between the adjacent heater and sensor conductor paths and from heat flowing along the insulator surface. However, the heat from these sources is very minor when compared to heat returned from the top plate 40 or reflective plate 48. As the heated surface gives up its heat to the environment or to an object making contact with it, the change in the heated surface is detected by the sensor conductors 104. The resistance change in the sensor conductor 104 can be used to monitor and control the temperature of the heater and sensor assembly.

Terminal ends of the heater conductor 102 are welded to conductors 110 either directly or using nickel strips (not shown). Similarly, terminal ends of the sensor conductor 104 are welded to conductors 112 either directly or using additional nickel strips (not shown).

Referring to Fig. 6, a block diagram illustrates a temperature control 114 for the food warming apparatus using the foil heater and sensor assembly 42. The sensor conductors 112 are connected via a reference circuit 116, amplifier circuit 118, and analog to digital converter 120 to a microcontroller 122. The input to the microcontroller 122 is a digital value for the sensed temperature based on resistance of the sensor conductor 104. The sensed temperature is compared to a programmed value or a user select value from an input/output circuit 124. For example, the desired temperature may be set by one of the knobs 94, see Fig. 1. According to the comparison between actual temperature and desired temperature, the microcontroller 122 controls a heater driver circuit 126 through a heater control circuit 128 to supply line voltage to drive the heater conductor 102.

Thus, in accordance with the invention, the sensor conductor senses an entire area so that it in effect reads an average temperature over the defined sensed area. This sensed value can be more reliable in select applications compared to point sensing, which senses temperature only at a single point.

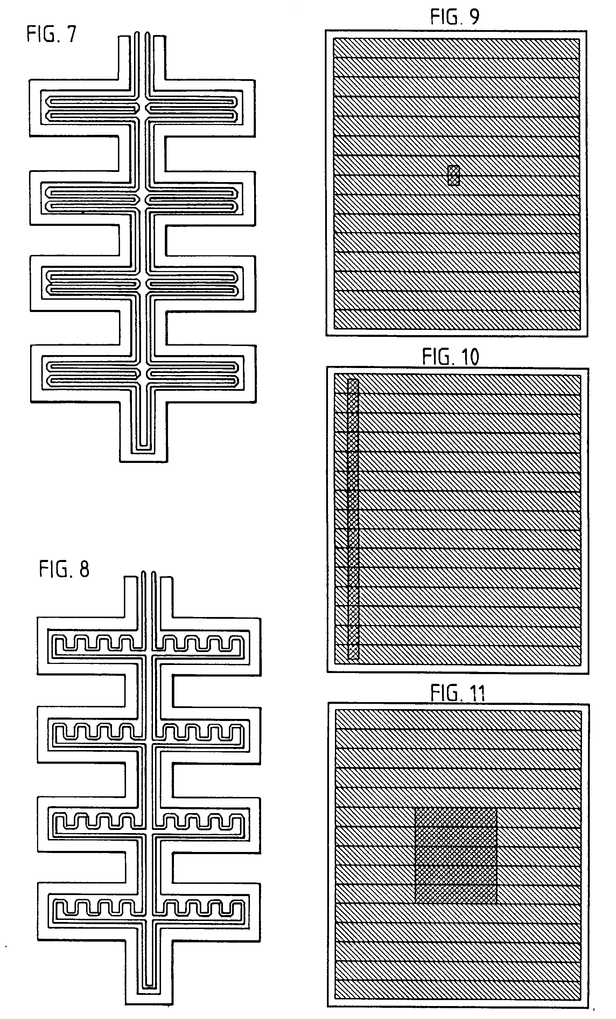

In the embodiment above, the particular food warming apparatus 10 is presented by way of example only. The foil heater and sensor assembly according to the invention could be used with any type of food warming apparatus or in other applications suitable for foil heaters. Likewise, the particular patterns of the foil conductor and sensor conductor are for illustration only. The particular pattern used is determined based on the specific product application. Figs. 7 and 8 illustrate alternative configurations of a heater conductor, shown in the wide line, and sensor conductor, shown in the narrow line. The heater conductor is generally wider to satisfy heating demand. With the sensor conductor it is desirable to have a maximum resistance in a defined area by extending the length of the conductor as indicated by the more defined serpentine pattern of the sensor conductors relative to the heater conductors in Figs. 7 and 8 compared to the same in Fig. 3.

Figs. 9, 10 and 11 illustrate examples which the described heater/sensor concept is used within a select zone of a heating device. Particularly, a heater conductor extends about an enlarged heated area with the sensor conductor being limited to a smaller defined sensed area of the heated area. This zone concept can be used, for example, if the temperature in the sensed area is sufficiently reliable to control heat applied to the entire heated area. In these views, the hatched area represents portions of the assembly including only a heater conductor, while the cross-hatched areas are sensed areas including both heater conductor pattern and sensor conductor pattern. The pattern may take any desired form, as above. Again, it is important that in the sensed area the sensor conductor be in a pattern similar to the heater conductor pattern and proximate thereto.

In Fig. 9 the sensed area is relatively small and can be located anywhere in the heated area. In applications using this type of sensor pattern location, the heat is uniformly given up. Therefore, the smaller area typifies the entire surface temperature. This embodiment resembles a point sensor except that since an elongate sensor conductor is used the temperature sensed is still over a greater area.

Fig. 10 illustrates an application in which the sensed area is as wide as the heater pattern in a narrow strip. This coverage and its location can be anywhere on the heater surface. This configuration is used where the narrow strip sensed temperature typifies the entire surface of the heater.

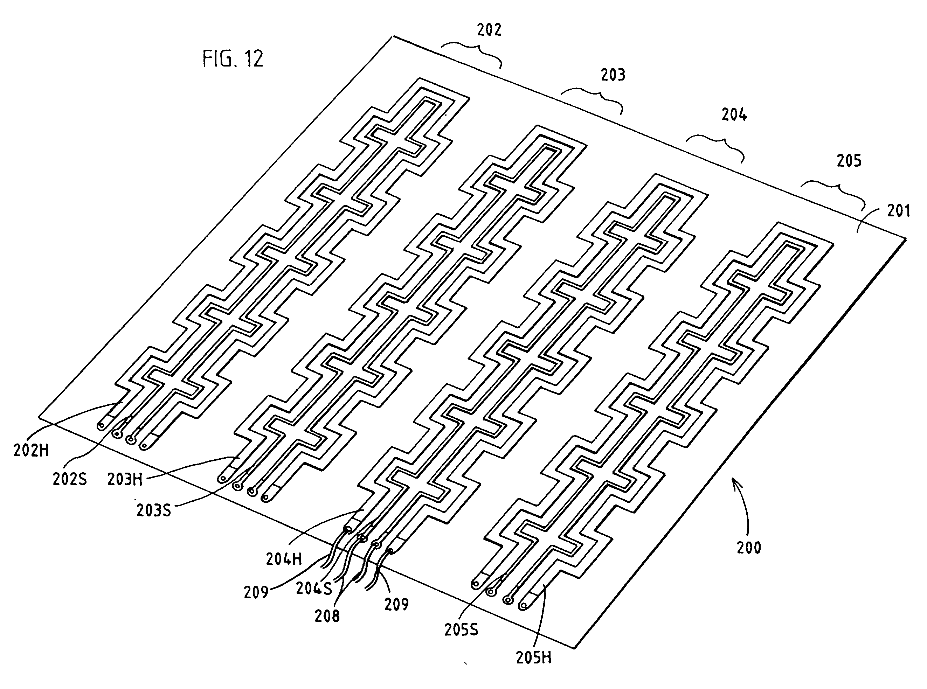

Fig. 11 illustrates a variation of a single point sensed area. The sensed area occupies a larger area than in Fig. 9 and again can be located anywhere in the heated area. As above, the sensed area must typify the entire surface temperature.

Finally, the sensed area can be as large as the entire heated surface area, as with Fig. 3 above.

In accordance with a further embodiment of the invention, a food warming apparatus includes a foil heater assembly for independently heating plural heated zone areas. As discussed above the apparatus 10 includes grates 24 and 26. Each grate has divider bars 34 dividing the grate into four areas for storing distinct food products. In accordance with the invention each of the four areas can be controlled independently.

In the alternative embodiment the heater and sensor assembly 42 is replaced with a plural zone foil heater assembly 200, see Fig. 12. The assembly 200 includes a substrate 201 divided into four heated zone areas 202, 203, 204 and 205. The zones correspond in position to the four areas defined by the divider bars 34, discussed above.

The substrate 201 comprises a ceramic or fiberglass mesh similar to the mesh 100, discussed above. A conductive stainless steel alloy resistance material is adhered to the mesh and is etched to form an elongate foil heater conductor and an elongate foil sensor conductor in each heated zone area. Particularly, the zone area 202 includes a heater conductor 202H and a sensor conductor 202S. The heater conductor 202H is formed in a first select pattern to generate heat proximate thereto in the first zone area 202, the sensor conductor 202S is in a second select pattern, generally similar to the first select pattern, to sense temperature of the heated zone area of its associated heater conductor 202H.

Each of the other zone areas 203-205 include similar heater conductors and sensor conductors identified with the respective suffixes "H" and "S".

In the illustrated embodiment the pattern in each zone area 202-205 is identical. The pattern could be different in each zone area based on the particular application.

As above, the mesh with the heater and sensor conductors thereon is sandwiched between mica sheets. Terminal ends of the conductors 202S-205S are welded to conductors 208. Similarly, terminal ends of the heater conductors 202H-205H are welded to conductors 209, as above.

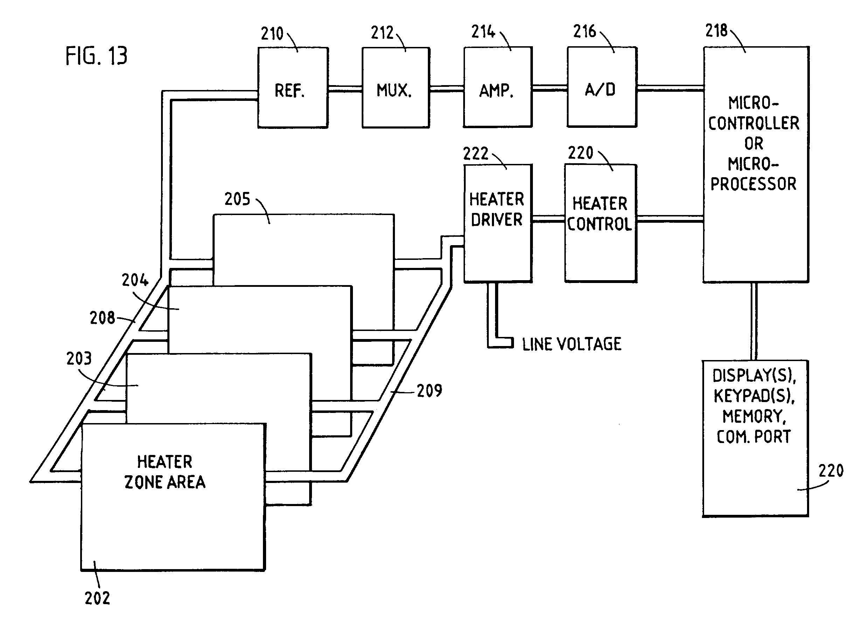

Referring to Fig. 13, a block diagram illustrates a temperature control 206 for the food warming apparatus using the plural zone foil heater assembly 200. Sensor conductors 208 from each zone area 202-205 are connected via a reference circuit 210, multiplexer circuit 212, amplifier circuit 214, and analog to digital converter 216 to a microcontroller 218. The sensed temperature signals from each zone are multiplexed via the multiplexer 212 under control of the microcontroller 218. The input to the microcontroller 218 is a digital value for the sensed temperature based on resistance of the associated sensor conductor. The sensed temperature is compared to a programmed value or a user select value from an input/output circuit 220 for each of the four zones. For example, the desired temperature may be set by one of the knobs 94, see Fig. 1. Each zone may have the identical temperature or a different temperature, as desired. According to the comparison between actual temperature and desired temperature, the microcontroller 218 controls a heater driver circuit 222 through a heater control circuit 224 to supply line voltage via the conductors 209 to independently drive the heater conductor of each of the four zones.

As is apparent, the separate heated zone areas can be provided in any desired configuration. In addition to unique product control, as above, an area for a single product can itself have plural heated zones. This allows staged heating within a product area.

Temperature regulation in the microcontroller 218 can range from simple on/off thermostat control to precision control using PID or "fuzzy" logic. Advantageously, the microcontroller, in select applications, includes an anticipator or cascade form of control. In this aspect, the Several heaters are sequenced to provide zones of heat as product passes through the product zones. Heat lost as product passes through a zone is detected as a temperature drop to alert the subsequent zones of its imminent loss of heat.

The load size of an object as it moves through a first zone can be determined based on the amount of temperature drop. A small object produces a small temperature drop. Also, as an object moves through the heat zones its temperature rises so that it requires less heat. This changes are used to control temperature in each of the subsequent zones. The location of the object can also be used for control. A time delay is implemented in sequential heaters based on response time of the heaters. For example, if the response time for a heater is one third the time it takes an object to move through a zone, then the offset control temperature of the following zone heater is delayed to minimize wasted energy.

As an object moves through the zones, the microcontroller 218 will override preset temperature setpoints and adjust them higher or lower. The change amount is based on the detected load. likewise the turn on can be delayed. Each is implemented to satisfy the objects discussed above.

Thus, in accordance with the invention a sensed zone area of a foil and sensor heater assembly includes a sensor conductor which extends in a pattern similar to a pattern for the heater conductor and in proximity thereto and which is controlled independently of other zones.

It will be understood that the invention may be embodied in other specific forms without departing from the spirit or central characteristics thereof. The present examples and embodiments, therefore, are to be considered in all respects as illustrative and not restrictive, and the invention is not to be limited to the details given herein.

## Claims

1. A foil heater and sensor assembly comprising:
a substrate having a select size and shape;
an elongate foil heater conductor secured to the substrate, the heater conductor extending about the substrate in a first select pattern to generate heat proximate thereto in a defined area; and
an elongate foil sensor conductor secured to the substrate, the sensor conductor extending about the substrate proximate the heater conductor in a second select pattern, generally similar to the first select pattern, whereby to sense temperature of the entire defined area.

2. A foil heater and sensor assembly as claimed in claim 1, including a temperature control for maintaining a desired temperature, the heater conductor being operatively associated with the temperature control, and the sensor conductor being connected to the temperature control.

3. A plural zone foil heater and sensor assembly comprising:
a substrate having a select size and shape, the substrate defining plural heated zone areas;
a plurality of elongate foil heater conductors secured to the substrate, each said heater conductor extending about one of the heated zone areas in a first select pattern to generate heat proximate thereto; and
a plurality of elongate foil sensor conductors secured to the substrate, each said sensor conductor extending about the substrate proximate an associated one of the heater conductors in a second select pattern, generally similar to the first select pattern of that associated heater conductor, whereby to sense temperature of the heated zone area of its associated heater conductor.

4. A foil heater and sensor assembly as claimed in claim 3, including a temperature control for maintaining a desired temperature, the heater conductors being operatively associated with the temperature control, and the sensor conductors being connected to the temperature control.

5. A foil heater and sensor assembly as claimed in claim 4, wherein the temperature control further comprises a cascade control that anticipates temperature changes in subsequent ones of the heated zone areas based on temperature senses in a select one of the heated zone areas.

6. A foil heater and sensor assembly as claimed in claim 5, wherein the temperature control includes a time delay for delaying operation of the cascade control according to a select response time of the heater conductors to minimize wasted energy.

7. A foil heater and sensor assembly as claimed in claim 5 or claim 6, wherein the temperature control includes a desired temperature for each said heated zone area and the cascade control is operable to set an override setpoint for the other heated zone areas.

8. A foil heater and sensor assembly as claimed in any of the preceding claims, including a housing for food products and a heated plate in the housing, and means mounting the or each heater conductor and sensor conductor proximate the heated plate.

9. A foil heater and sensor assembly as claimed in any of the preceding claims, wherein the substrate comprises a mesh.

10. A foil heater and sensor assembly as claimed in any of the preceding claims, wherein the substrate comprises a fiberglass mesh.

11. A foil heater and sensor assembly as claimed in any of the preceding claims, wherein the or each heater conductor comprises a foil layer on the substrate etched to form the first select pattern.

12. A foil heater and sensor assembly as claimed in any of the preceding claims, wherein the or each sensor conductor comprises a foil layer on the substrate etched to form the second select pattern.

13. A foil heater and sensor assembly as claimed in any of claims 1 to 10, wherein the or each heater and sensor conductor comprise a foil layer on the substrate etched to form the first and second select patterns.

14. A foil heater and sensor assembly as claimed in any of the preceding claims, further comprising insulating sheets sandwiching the substrate.

15. A foil heater and sensor assembly as claimed in claim 14, wherein the sheets comprise mica sheets.

16. A foil heater and sensor assembly as claimed in claim 1, wherein the substrate defines plural heated zone areas, and including one of the elongate foil heater conductors extending about each heated zone area in a first select pattern, and one of the elongate foil sensor conductors extending about the substrate proximate an associated one of the heater conductors in a second select pattern, generally similar to the first select pattern of that associated heater conductor, whereby to sense temperature of the heated zone area of its associated heater conductor.
